Europäisches Patentamt

European Patent Office

Office européen des brevets

(11) Veröffentlichungsnummer: **0 611 594 A1**

# EUROPÄISCHE PATENTANMELDUNG

(21) Anmeldenummer: **93118580.5**

(22) Anmeldetag: **16.11.93**

(51) Int. Cl.5: **B01J 35/00**, B01D 53/36

(30) Priorität: **17.02.93 EP 93102492**

(43) Veröffentlichungstag der Anmeldung:
**24.08.94 Patentblatt 94/34**

(84) Benannte Vertragsstaaten:
**AT BE CH DE DK ES FR GB IT LI NL SE**

(71) Anmelder: **SIEMENS AKTIENGESELLSCHAFT
Wittelsbacherplatz 2
D-80333 München (DE)**

(72) Erfinder: **Balling, Lothar, Dipl.-Ing. (FH)
Marienstrasse 6
D-90762 Fürth (DE)**
Erfinder: **Hüttenhofer, Klaus, Dipl.-Ing. (FH)
Fliederweg 7
D-90562 Heroldsberg (DE)**

(54) Katalysator zur Umsetzung von Reaktanten eines Gasgemisches.

(57) Bei der katalytischen Umsetzung von Reaktanten eines Gasgemisches tritt neben der gewünschten katalytischen Reaktion meist auch eine unerwünschte, katalysierte Nebenreaktion auf.

Zur hinreichend guten katalytischen Umsetzung mindestens zweier Reaktanten eines Gasgemisches bei gleichzeitig guter Unterdrückung unerwünschter Nebenreaktionen ist erfindungsgemäß ein Katalysator zur Beschleunigung der Reaktion dieser Reaktanten vorgesehen, bei dem die chemische Zusammensetzung der katalytisch aktiven Substanz in Strömungsrichtung des Gasgemisches veränderlich ist.

Hierdurch können unerwünschte Nebenreaktionen, wie z.B. die $SO_2/SO_3$-Konversion bei der Verwendung eines $DeNO_x$-Katalysators oder die Generierung von Stickoxiden in einem Oxidationskatalysator, durch eine geeignete Wahl der chemischen Zusammensetzung weitgehend unterdrückt werden.

FIG 1

Die Erfindung bezieht sich auf einen Katalysator zur Beschleunigung mindestens einer Reaktion zwischen mindestens zwei Reaktanten eines Gasgemisches, umfassend einen Katalysatorträger und eine katalytisch aktive Substanz.

Zur katalytischen Umsetzung von Reaktanten eines Gasgemisches werden in einer Vielzahl von technischen und industriellen Anwendungen speziell an die jeweilige Reaktion der Reaktanten und die Reaktionsbedingungen angepaßte Katalysatoren eingesetzt. Beispiele hierfür sind sogenannte Oxidationskatalysatoren und DeNO$_x$-Katalysatoren.

An Oxidationskatalysatoren, deren katalytische Aktivität im wesentlichen durch den Gehalt an Edelmetallen und/oder Oxiden der Übergangsmetalle bestimmt wird, werden beispielsweise Kohlenmonoxid und Kohlenwasserstoffe bei gleichzeitiger Anwesenheit von Luftsauerstoff katalytisch zu Kohlendioxid und Wasser umgesetzt. Bei dieser Art von exothermer Reaktion kommt es zu einer Erwärmung des Katalysators, die unerwünschte Nebenreaktionen, wie beispielsweise die Bildung von Stickoxiden, begünstigt.

An DeNO$_x$-Katalysatoren werden Stickoxide bei gleichzeitiger Anwesenheit von Ammoniak nach dem Verfahren der selektiven katalytischen Reduktion (SCR) katalytisch zu Stickstoff und Wasser umgesetzt. Da in Rauchgasen, in denen Stickoxide vorhanden sind, zumeist auch Schwefeldioxid enthalten ist, begünstigen DeNO$_x$-Katalysatoren aufgrund der in ihnen enthaltenen katalytisch aktiven Substanzen als unerwünschte Nebenreaktion die Konversion von Schwefeldioxid SO$_2$ zu Schwefeltrioxid SO$_3$. Die sich am Katalysator aus Ammoniak und Schwefeltrioxid bildenden Ammonsulfate sind stark hydrophil. Bei Unterschreitung des Taupunktes verkleben und verstopfen diese Ammonsulfate alle nachgeschalteten Komponenten in höchst nachteiliger Weise.

Übliche DeNO$_x$-Katalysatoren werden auf der Basis von Titandioxid TiO$_2$ mit einem oder mehreren der Zusätze Wolframtrioxid WO$_3$, Molybdäntrioxid MoO$_3$ und Vanadinpentoxid V$_2$O$_5$ hergestellt, wobei die katalytische Aktivität im wesentlichen durch den Gehalt an Vanadinpentoxid V$_2$O$_5$ und V$_x$Mo$_x$O$_{32-z}$ bestimmt ist. Die genannte Nebenreaktion wird zusätzlich dadurch verstärkt, daß der Gehalt an Ammoniak und Stickoxiden in Strömungsrichtung des Rauchgases im Katalysator infolge der vorangegangenen katalytischen Umsetzung abnimmt, und die katalytisch aktiven Zentren infolge der Abnahme von Ammoniak und Stickoxiden zunehmend zur SO$_2$/SO$_3$-Konversiongenutzt werden.

Der Erfindung liegt daher die Aufgabe zugrunde, einen Katalysator der eingangs genannten Art anzugeben, der an die jeweils gewünschte katalytische Reaktion der Reaktanten des Gasgemisches angepaßt ist und dabei unerwünschte Nebenreaktionen besonders gut vermeidet.

Diese Aufgabe wird erfindungsgemäß dadurch gelöst, daß die katalytisch aktive Substanz zur Unterdrückung unerwünschter Nebenreaktionen in Strömungsrichtung des Gasgemisches eine veränderliche chemische Zusammensetzung aufweist. Hierdurch ist es möglich, die katalytische Aktivität des Katalysators entlang seiner Durchströmungsstrecke an die Zusammensetzung des Gasgemisches, die Strömungsgeschwindigkeit und die Temperatur anzupassen.Eine solche unterschiedliche chemische Zusammensetzung läßt sich mit katalytischen Substanzen und zugehörigen Trägern erreichen, die an die verschiedenen katalytischen Reaktionen angepaßt sind.

In vorteilhafter Ausgestaltung der Erfindung kann der makroskopische Aufbau des Katalysators veränderlich sein. Mit makroskopischem Aufbau ist hierbei die innere Struktur des Katalysators und seiner Gaskanäle gemeint, die bei waben- und plattenförmigen Katalysatoren sowie Katalysatorschaltungen unterschiedlich ist. Durch eine geeignete Hintereinander-Anordnung dieser Katalysatorformen entlang des Durchströmungsweges des Katalysators können die Verweilzeiten der Reaktanten im Katalysator derart gezielt beeinflußt werden, daß selbst bei einer Verarmung der Reaktanten infolge der vorangegangenen gewünschten Reaktion im Gasgemisch die unerwünschte Nebenreaktion zurückgedrängt bleibt. Ein Beispiel hierfür ist die Anordnung von DeNO$_x$-Wabenkatalysatoren in Strömungsrichtung eines Stickoxid- und Ammoniak-haltigen Rauchgases hinter DeNO$_x$-Plattenkatalysatoren.

In besonders vorteilhafter Weise kann dabei die katalytische Aktivität der verwendeten katalytisch aktiven Substanz des Katalysators in Strömungsrichtung des Gasgemisches bei einer infolge einer vorgesehenen exothermen Reaktion der Reaktanten bedingten Temperaturerhöhung abnehmend und bei einer infolge einer vorgesehen endothermen Reaktion der Reaktanten bedingten Temperaturerniedrigung zunehmend sein. Hierdurch wird erreicht, daß die katalytische Aktivität je Oberflächeneinheit, zu der die katalytische Aktivität der verwendeten katalytischen Substanz des Katalysators und die physikalischen Bedingungen, insbesondere die Temperatur, beitragen, bei vorgegebenen Gasgemischbedingungen entlang der Durchströmungsstrecke im Katalysator weitgehend unverändert bleibt. Damit ist die katalytische Aktivität je Oberflächeneinheit ausreichend groß, die gewünschte katalytische Reaktion zu unterstützen. Gleichzeitig werden hierdurch unerwünschte Nebenreaktionen auf ein Mindestmaß begrenzt, da nur eine begrenzte Anzahl katalytisch aktiver Zentren überhaupt noch für die Katalyse der Nebenreaktionen frei ist.

Eine weitere zweckmäßige Ausgestaltung liegt vor, wenn in der katalytisch aktiven Substanz im wesentlichen Titandioxid ($TiO_2$), Vanadinpentoxid ($V_2O_5$) und/oder $V_xMo_yO_{32-z}$ mit $x + y \leq 12$; $x, y \geq 1$; $z \leq 1$ und einer oder mehrere der Zusätze Wolframtrioxid ($WO_3$) und Molybdäntrioxid ($MoO_3$) enthalten sind, wobei in Strömungsrichtung des Gasgemisches der Gehalt an Vanadinpentoxid und/oder $V_xMo_yO_{32-z}$ bei vorgesehenem Einsatz in exothermen Reaktionen abnimmt und bei vorgesehenem Einsatz in endothermen Reaktionen zunimmt.

Zur Anwendung der Erfindung an einem Katalysator zur Verminderung der Stickoxide in Rauchgas kann die Erfindung dahingehend weitergebildet werden, daß die Konzentration von Vanadinpentoxid und/oder $V_xMo_yO_{32-z}$ mit $x + y \leq 12$; $x, y \geq 1$; $z \leq 1$ in der katalytisch aktiven Substanz, in der im wesentlichen Titandioxid, Vanadinpentoxid und/oder $V_xMo_yO_{32-z}$ und einer oder mehrere der Zusätze Wolframtrioxid und Molybdäntrioxid enthalten sind, in Strömungsrichtung des Gasgemisches, hier des Rauchgases, entsprechend einem abnehmenden Ammoniak-Gehalt im Gasgemisch abnimmt. Hierdurch nimmt die katalytische Aktivität der katalytisch aktiven Zentren - im weitesten Sinne die gesamte Oberflächenschicht - in Strömungsrichtung des Gasgemisches ab. Infolge der Aktivitätsabnahme bleiben die katalytisch aktiven Zentren länger mit Ammoniak belegt, wodurch die katalytische Umsetzung von Stickoxiden und Ammoniak zwar verlangsamt wird, gleichzeitig aber stehen die auf diese Weise belegten katalytisch aktiven Zentren nicht zur unerwünschten $SO_2/SO_3$-Konversion zur Verfügung.

Hierbei ist es zur hinreichend guten katalytischen Umsetzung der Stickoxide und zur hinreichend guten Unterdrückung der Nebenreaktion, beispielsweise der $SO_2/SO_3$-Konversion, besonders vorteilhaft, wenn die Konzentration von Vanadinpentoxid und/oder $V_xMo_yO_{32-z}$ je nach reaktionsbedingter Temperaturzu- oder -abnahme ausgehend von maximal 10 Gew.-% abnimmt bzw. auf maximal 10 Gew.-% zunimmt.

Es ist besonders zweckmäßig, wenn die katalytische Aktivität stufenweise abnehmend bzw. zunehmend eingestellt ist. Hierdurch kann der Katalysator, der häufig aus mehreren Ebenen von in Modulen angeordnetem katalytischem Material gebildet wird, durch eine einfache Änderung der Zusammensetzung bezüglich der katalytischen Aktivität in der jeweiligen Katalysatorebene (Lage) bereitgestellt werden. Dies bedeutet insbesondere für einen $DeNO_x$-Katalysator, der üblicherweise aus etwa zwei bis fünf Ebenen von in Modulen angeordnetem katalytischem Material gebildet wird, daß der Gehalt von Vanadinpentoxid und/oder $V_xMo_yO_{32-z}$ von Katalysatorebene zu Katalysatorebene oder innerhalb eines Modules von Lage zu Lage variiert und dabei in Strömungsrichtung des Gasgemisches (des Rauchgases) abnimmt. Hierdurch ändert sich vorteilhafterweise an dem gesamten Produktionsprozeß zur Herstellung eines erfindungsgemäßen Katalysators nur die in verschiedenen Abstufungen vorgesehene Beimengung der katalytisch aktiven Substanz $V_2O_5$ und/oder $V_xMo_yO_{32-z}$ zu den anderen Ausgangsmaterialien.

Zur Unterdrückung von unerwünschten Nebenreaktionen (z.B. Stickoxidbildung) in einem Katalysator, der beispielsweise Kohlenwasserstoffe und/oder Kohlenmonoxid mit Luftsauerstoff katalytisch zu Wasser und Kohlendioxid umsetzt, ist es zweckmäßig, wenn als katalytisch aktive Substanz Platin (Pt) und/oder Kupferoxid (CuO) und/oder Eisenoxid (FeO) vorgesehen sind, wobei die Konzentration der katalytisch aktiven Substanz in Strömungsrichtung des Gasgemisches je nach reaktionsbedingter Temperaturzu- oder -abnahme abnehmend bzw. zunehmend ist. Diese Vorgehensweise ist insbesondere in einigen Anwendungsfällen von Vorteil, bei denen die Konzentration der Reaktanten im Gasgemisch so groß ist, daß die Temperatur des Gasgemisches infolge der Reaktion der Reaktanten um mehrere hundert Kelvin ansteigt; z.B. wird 1 $Nm^3$ Rauchgas, das 1 g Kohlenmonoxid enthält, in einem Oxidationskatalysator bei vollständigem Umsatz des Kohlenmonoxids zu Kohlendioxid um etwa 8 K aufgeheizt. Jede Aufheizung des Gasgemisches bei gleichzeitiger Anwesenheit von Sauerstoff und Stickstoff fördert die Bildung von unerwünschten Stickoxiden an den katalytisch aktiven Zentren des Katalysators.

Es ist zweckmäßig, wenn die Konzentration der obengenannten katalytisch aktiven Substanz ausgehend von maximal 10 Gew.-% abnimmt bzw. auf maximal 10 Gew.-% zunimmt.

Weitere vorteilhafte Ausgestaltungen der Erfindung sind den übrigen Unteransprüchen zu entnehmen. Ausführungsbeispiele der Erfindung werden anhand der Zeichnung näher erläutert. Dabei zeigen:

Figur 1     einen Katalysator zur Verminderung der Stickoxide in Rauchgas einer Verbrennungsanlage;

Figur 2     einen Katalysator zur Oxidation von Kohlenwasserstoffen und Kohlenmonoxid; und

Figur 3     einen Katalysator zu Verminderung der Stickoxide in Rauchgas mit Mitteln zum Wärmetausch.

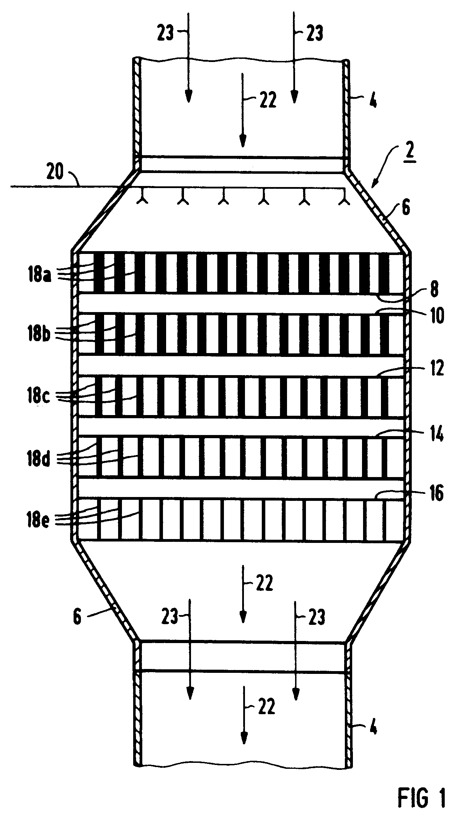

In den Figuren 1 bis 3 gleiche Teile haben gleiche Bezugszeichen.

Der in Figur 1 dargestellte Katalysator 2 zur Verminderung von Stickoxiden in Rauchgas 23 ($DeNO_x$-Katalysator) ist in einer Rauchgasleitung 4 einer Verbrennungsanlage eingebaut. In diesem Ausführungsbeispiel ist Kohle mit einem relativ hohen Schwefelgehalt als Energieträger vorgesehen. Der $DeNO_x$-Katalysator 2 besteht aus einem Reaktor 6, in den fünf Lagen oder Katalysatorebenen 8 bis 16, die katalytisches Material 18a bis 18e beinhalten, und eine Eindüsvorrichtung 20 für Ammoniak eingebaut sind. Beim Betrieb der Verbrennungsanlage wird der $DeNO_x$-Katalysator 2 in Richtung der Pfeile 22 von dem Rauchgas 23 durchströmt.

Aufgrund der Verbrennung von Kohle mit einem relativ hohen Schwefelgehalt hat das Rauchgas 23 beim Eintritt in den $DeNo_x$-Katalysator 2 einen Schadstoffgehalt von u.a. etwa 3000 $mg/Nm^3$ Schwefeldioxid und etwa 1000 $mg/Nm^3$ Stickoxide. Wegen des hohen Schwefeldioxidgehalts im Rauchgas 23 ist die Zusammensetzung des katalytischen Materials 18a bis18e des $DeNO_x$-Katalysators 2 von Katalysatorebene zu Katalysatorebene variiert; und zwar wird der Gehalt von Vanadinpentoxid im katalytischen Material 18a bis 18e von 1,5 Gew.-% in der eingangsseitigen Katalysatorebene 8 in Schritten von 0,3 Gew.-% bis auf 0,3 Gew.-% in der ausgangsseitigen Ebene 16 abgesenkt. Dieser Sachverhalt ist durch unterschiedliche Strichstärken symbolisiert. Das katalytische Material 18a bis 18e liegt hierbei in Form von Wabenkatalysatoren vor, die - in Elementkästen eingebaut - zu Modulen zusammengefügt sind, wobei jede Katalysatorebene 8 bis 16 aus mehreren Modulen aufgebaut ist. Das katalytische Material 18a enthält neben 1,5 Gew.-% Vanadinpentoxid $V_2O_5$ etwa 6 Gew.-% Molybdänoxid $MoO_3$ oder Wolframoxid $WO_3$, geringe Mengen von Zusatzstoffen und ist mit Titandioxid $TiO_2$ zu 100 Gew.-% ergänzt.

An den katalytisch aktiven Zentren werden die Stickoxide mit Ammoniak katalytisch zu Wasser und Stickstoff umgesetzt. Hierbei wird die $SO_2/SO_3$-Konversion solange unterdrückt, wie im Rauchgas 23 noch genügend Ammoniak vorhanden ist, um die katalytisch aktiven Zentren mit Ammoniak zu benetzen. Bei räumlich fortschreitender Durchströmung des $DeNO_x$-Katalysators 2 nimmt der Gehalt an Stickoxiden und Ammoniak im Rauchgas 23 infolge der katalytischen Umsetzung dieser beiden Reaktanten rasch ab. Insgesamt soll die Stickoxidbelastung des Rauchgases 23 infolge der katalytischen Umsetzung der Stickoxide im $DeNO_x$-Katalysator 2 durch die Kontaktierung am katalytischen Material 18a - e aufgrund gesetzlicher Bestimmungen, etwa wegen der TA Luft, auf etwa 150 $mg/Nm^3$ Rauchgas absinken. Hierbei bleibt insgesamt gesehen die Konzentration an Schwefeldioxid unverändert. Infolge der katalytischen Umsetzung der Stickoxide und des Ammoniaks würden die katalytisch aktiven Zentren insbesondere in den zuletzt in Strömungsrichtung angeordneten Katalysatorebenen 14 und 16 zunehmend zur Konversion von Schwefeldioxid zu Schwefeltrioxid genutzt, wenn nicht - wie in diesem Ausführungsbeispiel erfindungsgemäß ausgebildet - die Anzahl der zur Verfügung stehenden katalytisch aktiven Zentren durch die Abnahme des Vanadinpentoxid-Gehalts vermindert wäre. Hierdurch besetzt das Ammoniak die katalytisch aktiven Zentren hinreichend lange, wodurch die noch zur Verfügung stehenden $V_2O_5$-Zentren primär zur katalytischen Umsetzung der noch im Rauchgas 23 befindlichen Stickoxide und des Ammoniaks genutzt werden. Dadurch finden die $SO_2$-Moleküle keine oder nur wenige freie katalytisch aktive Zentren mit ausreichend hoher katalytischer Aktivität, wodurch die $SO_2/SO_3$-Konversion als unerwünschte Nebenreaktion weitgehend vermieden wird.

Zur guten katalytischen Umsetzung der Stickoxide und des Ammoniaks wirkt sich in diesem Ausführungsbeispiel - wenn auch nur von untergeordneter Bedeutung - ein Wärmeeintrag aus, der durch die geringfügig exotherme Reaktion der Stickoxide mit dem Ammoniak bedingt ist. Infolge der Temperaturerhöhung des Rauchgases 23 wird der Abnahme der katalytischen Aktivität infolge der obengenannten Verringerung des Vanadinpentoxidgehalts entgegengewirkt. Bei der Bemessung kann dadurch eine zusätzliche geringe Absenkung des Vanadinpentoxidgehaltes in Strömungsrichtung des Rauchgases 23 berücksichtigt werden.

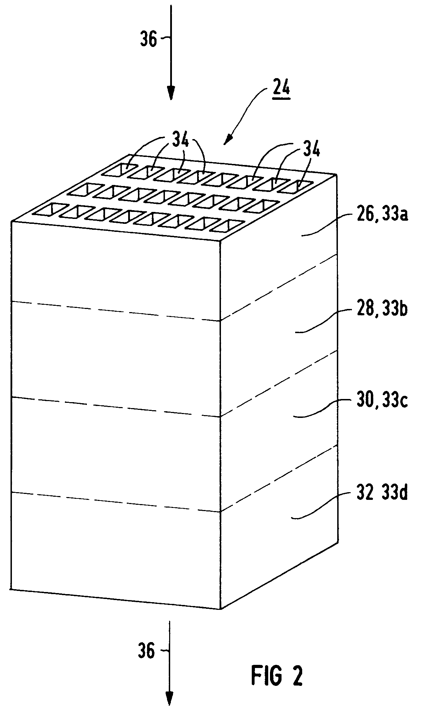

Der in Figur 2 dargestellte wabenförmige Katalysator 24 ist zur Oxidation von Kohlenwasserstoffen und Kohlenmonoxid vorgesehen. Der Katalysator 24 besteht aus vier Teilen 26 - 32, die eine unterschiedliche chemische Zusammensetzung der katalytisch aktiven Substanz 33a bis 33d aufweisen. Als katalytisch aktive Substanz 33a bis 33d weist der Teil 26 einen Platingehalt von 4 Gew.-% auf. Der Platingehalt verringert sich in Strömungsrichtung fortlaufend um 1 Gew.-%, so daß der Teil 32 nur noch 1 Gew. % Platin beinhaltet. Als Trägermaterial für das Platin dient Aluminiumoxid $Al_2O_3$, das selbst auf eine keramische Tragstruktur aufgebracht ist.

Beim bestimmungsgemäßen Betrieb des Katalysators 24 werden die Gaskanäle 34 des Katalysators 24 von einem Kohlenmonoxid- und Kohlenwasserstoff-haltigen Abgas 36 durchströmt. Dabei strömt das Abgas 36 zunächst in den in der Pfeilrichtung zuerst angeordneten Teil 26 des Katalysators 24, der infolge seines Platingehaltes von etwa 4 Gew.-% die höchste katalytische Aktivität der verwendeten chemischen Zusammensetzung aller Teile 26 - 32 aufweist. Durch die Kontaktierung des Kohlenmonoxids und der Kohlenwasserstoffe an dem oberflächlich aufgetragenen Platin werden diese Schadstoffe bei gleichzeitiger Anwesenheit des Luftsauerstoffs zu Kohlendioxid und Wasser umgesetzt. Da sich das Abgas 36 infolge der katalytischen Umsetzung der genannten Schadstoffe aufheizt, wird eine hinreichend gute katalytische Umsetzung des Kohlenmonoxids und der Kohlenwasserstoffe entlang des Durchströmungsweges auch schon bei geringeren katalytischen Aktivitäten des Teils 28 und der darauf folgenden Teile 30 und 32 des Katalysators 24 erreicht. Stickoxide, die eventuell im Abgas 36 in Strömungsrichtung des Abgases vor dem Eintritt in den Katalysator 24 enthalten sind, werden von diesem Katalysator 24 mit dem Kohlenmonoxid, das als Reduktionsmittel für Stickoxide wirkt, katalytisch zu Stickstoff und Kohlenmonoxid umgesetzt.

Infolge der Abnahme des Platingehalts der Teile 26 bis 32 des Katalysators 24 in Richtung des Strömungsweges bleibt die katalytische Aktivität pro Flächeneinheit, bestimmt durch die katalytische Aktivität des Katalysators 24 und die physikalischen Bedingungen, entlang des gesamten Strömungsweges durch den Katalysator 24 für das Abgas 36 nahezu gleich. Eine entlang des Strömungsweges gleichbleibende katalytische Aktivität der verwendeten katalytisch aktiven Substanz des Katalysators 24 (gleichbleibender Platingehalt) würde anderenfalls bei ansteigender Rauchgastemperatur zu der Generierung unerwünschter und umweltschädlicher Stickoxide führen. Den mit dem Einsatz eines solchen Katalysators verbundenen Vorteilen stünden damit große Nachteile infolge der Stickoxidbildung entgegen.

Der gezeigte Katalysator 24 ist aus vier separat hergestellten Teilen 26 - 32 zusammengesetzt, wobei der Herstellungsprozeß für die Teile 26 - 32 immer der gleiche ist, mit Ausnahme einer von Charge zu Charge unterschiedlichen Platinkonzentration im Ausgangsmaterial.

Eine alternative Vorgehensweise zur Herstellung eines Katalysators 24 mit einem in Strömungsrichtung des Abgases 36 abnehmenden Gehalt an katalytisch aktiver Substanz kann darin bestehen, die Zusammensetzung der Katalysatorrohmasse beim Herstellungsschritt des Extrudierens zu variieren, beispielsweise mehr oder weniger kontinuierlich. Dies führt dazu, daß der Gehalt an katalytisch aktiver Substanz, hier Platin, entlang des Strömungsweges für das Abgas beispielsweise linear abnimmt oder auch ein abgerundetes Stufenprofil entlang des Strömungsweges aufweist.

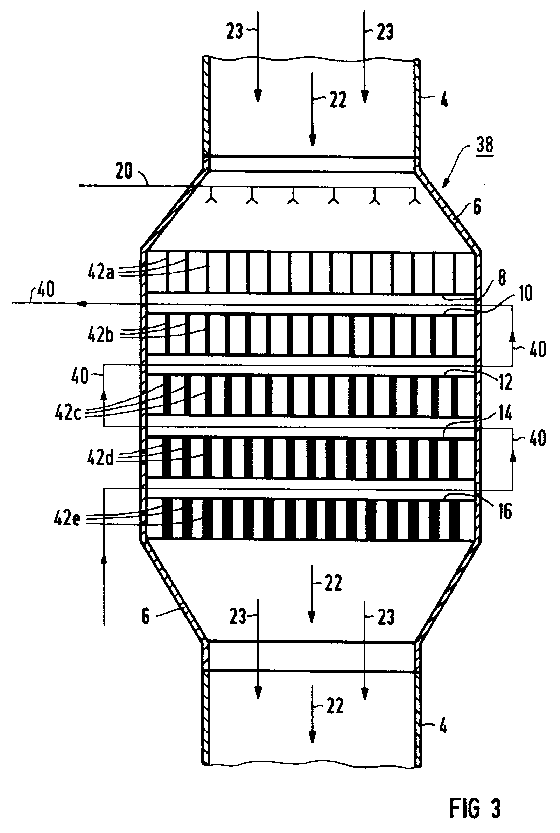

Ein weiteres, hier in Figur 3 dargestelltes Ausführungsbeispiel erhält man, wenn in einem Katalysator 38 bei einer vorgesehenen exothermen Reaktion, wie der DeNO$_x$-Reaktion, entlang des Strömungsweges des Rauchgases 23 Mittel 40 zur Temperaturabsenkung vorgesehen sind. Die Mittel 40 zur Temperaturabsenkung können beispielsweise mit Wasser durchflossene Wärmetauscherrohre oder mit Luft durchströmte Wärmetauscherrohre sein.

Der DeNO$_x$-Katalysator 38 ist dann beispielsweise in einem als Abhitzekessel ausgestalteten Reaktor 6 angeordnet. Die katalytisch aktive Substanz 42a bis 42e befindet sich auf in Ebenen 8 bis 16 angeordneten Plattenkatalysatoren. Die in den Ebenen 8 bis 16 angeordnete katalytisch aktive Substanz 42a bis 42e umfaßt Titandioxid, Vanadinpentoxid und/oder $V_xMo_yO_{32-z}$ mit $x + y \leq 12$; $x, y \geq 1$; $z \leq 1$ und Molybdänoxid, wobei der Gehalt an Vanadinpentoxid und/oder $V_xMo_yO_{32-z}$ in der Substanz 42a etwa 1 Gew.-% beträgt und in Strömungsrichtung des Rauchgases von Ebene zu Ebene um etwa 1 Gew.-% auf etwa 5 Gew.-% in Ebene 16 ansteigt. Dies ist durch die unterschiedlichen Strichdicken für die katalytisch aktive Substanz 42a bis 42e symbolisiert. An der katalytisch aktiven Substanz 42a bis 42e werden die im Rauchgas 23 enthaltenen Stickoxide und Ammoniak kontaktiert und katalytisch zu Stickstoff und Wasser umgesetzt. Infolge der kontinuierlichen Temperaturabnahme des Rauchgases 23 entlang der katalytisch aktiven Substanz 42a bis 42e im Reaktor 6 sinkt der Abscheidegrad für Stickoxide durch die damit verbundene Abnahme der Gesamtaktivität. Diese Abnahme wird jedoch durch die Erhöhung des Anteils an katalytisch aktiver Substanz, hier Vanadinpentoxid und/oder $V_xMo_yO_{32-z}$, entgegengewirkt, da die nur geringe Aufheizung des Rauchgases infolge der gering exothermen Reaktion der Stickoxide mit dem Ammoniak nicht ausreicht, diese Abnahme zu kompensieren.

Bei einem am Eingang des Reaktors 6 noch etwa 300° C warmen Rauchgas ist es zum Erreichen ausreichend hoher Abscheidegrade für Stickoxide und zur hinreichend guten Unterdrückung der SO$_2$/SO$_3$-Konversion zweckmäßig, den Gehalt an Vanadinpentoxid und/oder $V_xMo_yO_{32-z}$ von etwa 1 Gew.-% auf maximal 5 Gew.-% entlang des Strömungsweges des Rauchgases 23 im Katalysator 38 anwachsen zu lassen. Eine ungewollte stärkere Konversionsrate für SO$_2$ nach SO$_3$ ist durch die Zunahme des Vanadinpentoxidgehalts nicht zu befürchten, weil durch diese Zunahme gerade die Aktivitätsabnahme infolge der Temperaturabsenkung kompensiert wird. Auf diese Weise ist hier, wie auch bei den vorangehenden Ausführungsbeispielen, realisiert, daß die Reaktanten, hier gewollt Stickoxide und Ammoniak und ungewollt Schwefeldioxid und - trioxid, entlang ihres Strömungsweges durch den Katalysator immer eine gleichbleibende kataytische Aktivität des Katalysators "sehen".

Alternativ zu dem in Figur 3 gezeigten Ausführungsbeispiel kann die katalytisch aktive Substanz auch direkt auf wärmetauschenden Flächen aufgebracht sein, wie z. B. in Gas- oder Luftvorwärmern. Auch hier wird durch eine Anhebung des Anteils der katalytisch aktiven Komponente in der katalytisch aktiven Substanz eine entlang des Strömungsweges gleichbleibende katalytische Aktivität erhalten.

## Patentansprüche

1. Katalysator (2, 24, 38) zur Beschleunigung mindestens einer Reaktion zwischen mindestens zwei Reaktanten eines Gasgemisches (23, 36) umfasssend einen Katalysatorträger und eine katalytisch aktive Substanz (18a bis 18e, 33a bis 33d, 42a bis 42e), die zur Unterdrückung unerwünschter Nebenreaktionen in Strömungsrichtung des Gasgemisches (23, 36) eine veränderliche chemische Zusammensetzung aufweist.

2. Katalysator nach Anspruch 1,
**dadurch gekennzeichnet,** daß sein makroskopischer Aufbau in Strömungsrichtung des Gasgemisches veränderlich ist.

3. Katalysator nach Anspruch 1 oder 2,
**dadurch gekennzeichnet,** daß die katalytische Aktivität der verwendeten katalytisch aktiven Substanz (18a bis 18e, 33a bis 33d) des Katalysators (2, 24) in Strömungsrichtung des Gasgemisches (23, 36) bei einer infolge einer vorgesehenen exothermen Reaktion der Reaktanten bedingten Temperaturerhöhung abnehmend und bei einer infolge einer vorgesehenen endothermen Reaktion der Reaktanten bedingten Temperaturerniedrigung zunehmend ist.

4. Katalysator nach Anspruch 3,
**dadurch gekennzeichnet,** daß die katalytische Aktivität stufenweise abnehmend bzw. zunehmend ist.

5. Katalysator nach einem der Ansprüche 1 bis 4,
**dadurch gekennzeichnet,** daß in der katalytisch aktiven Substanz (18a bis 18e) im wesentlichen Titandioxid $(TiO_2)$, Vanadinpentoxid $(V_2O_5)$ und/oder $V_xMo_yO_{32-z}$ mit $x + y \leq 12$; $x, y \geq 1$; $z \leq 1$ und einer oder mehrere der Zusätze Wolframtrioxid $(WO_3)$ und Molybdäntrioxid $(MoO_3)$ enthalten sind, wobei in Strömungsrichtung des Gasgemisches (23, 36) der Gehalt an Vanadinpentoxid und/oder $V_xMo_yO_{32-z}$ entsprechend einem abnehmenden $NH_3$-Gehalt im Gasgemisch abnimmt.

6. Katalysator nach einem der Ansprüche 1 bis 5,
**dadurch gekennzeichnet,** daß in der katalytisch aktiven Substanz (18a bis 18e) im wesentlichen Titandioxid $(TiO_2)$, Vanadinpentoxid $(V_2O_5)$ und/oder $V_xMo_yO_{32-z}$ und einer oder mehrere der Zusätze Wolframtrioxid $(WO_3)$ und Molybdäntrioxid $(MoO_3)$ enthalten sind, wobei die Konzentration von Vanadinpentoxid und/oder $V_xMo_yO_{32-z}$ in Strömungsrichtung des Gasgemisches (23, 36) bei vorgesehenem Einsatz in exothermen Reaktionen abnimmt und bei vorgesehenem Einsatz in endothermen Reaktionen zunimmt.

7. Katalysator nach Anspruch 6,
**dadurch gekennzeichnet,** daß die Konzentration von Vanadinpentoxid und/oder $V_xMo_yO_{32-z}$ je nach reaktionsbedingter Temperaturzu- oder -abnahme ausgehend von maximal 10 Gew.-% abnimmt bzw. auf maximal 10 Gew.-% zunimmt.

8. Katalysator nach einem der Ansprüche 1 bis 4,
**dadurch gekennzeichnet,** daß als katalytisch aktive Substanz (33a bis 33d) Platin (Pt) und/oder Kupferoxid (CuO) und/oder Eisenoxid (FeO) vorgesehen ist, wobei die Konzentration der katalytisch aktiven Substanz in Strömungsrichtung des Gasgemisches (36) je nach reaktionsbedingter Temperaturzu- oder -abnahme abnehmend bzw. zunehmend eingestellt ist.

9. Katalysator nach Anspruch 8,
**dadurch gekennzeichnet,** daß die Konzentration der katalytisch aktiven Substanz ausgehend von maximal 10 Gew.-% abnimmt bzw. auf maximal 10 Gew.-% zunimmt.

10. Katalysator nach einem der Ansprüche 1, 2 oder 4,
**dadurch gekennzeichnet,** daß in der katalytisch aktiven Substanz im wesentlichen Titandioxid $(TiO_2)$, Vanadinpentoxid $(V_2O_5)$ und/oder $V_xMo_yO_{32-z}$ mit $x + y \leq 12$; $x, y \geq 1$; $z \leq 1$ und einer oder mehrere der Zusätze Wolframtrioxid $(WO_3)$ und Molybdäntrioxid $(MoO_3)$ enthalten sind, und bei einer vorgesehenen exothermen Reaktion, wie der DeNO$_x$-Reaktion, im Katalysator entlang des Strömungsweges des Gasgemisches Mittel zur Temperaturabsenkung vorgesehen sind, wobei der Gehalt an Vanadinpentoxid und/oder $V_xMo_yO_{32-z}$ zur Kompensation der Aktivitätsabnahme infolge der Temperaturerniedrigung in Strömungsrichtung des Gasgemisches zunimmt.

FIG 1

36

24

34

34

34

26, 33a

28, 33b

30, 33c

32 33d

36

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | DE-A-40 27 329 (SIEMENS AG) <br> * Spalte 1, Zeile 38 - Zeile 41 * <br> * Spalte 3, Zeile 12 - Spalte 4, Zeile 19; Ansprüche 1-5; Abbildung 1 * <br> --- | 1-7 | B01J35/00 <br> B01D53/36 |
| X | FR-A-2 325 805 (DEGUSSA) <br> * Seite 1, Zeile 30 - Seite 2, Zeile 3; Ansprüche 1-6; Abbildungen 1-6; Beispiele 1-8 * <br> --- | 1-4,8,9 | |
| X | FR-A-2 139 152 (MATSUSHITA ELEC IND CO.) <br> * Ansprüche 1-3; Abbildungen 1-4 * <br> --- | 1-4,8,9 | |
| X | FR-A-1 438 944 (HESS) <br> * Ansprüche 1,2; Abbildungen 1-5 * <br> --- | 1-4,8,9 | |
| X | DE-A-35 44 320 (RENNEBECK) <br> * Ansprüche 1-6; Abbildung 3 * <br> --- | 1-4 | |
| X | DE-A-40 32 085 (DIDIER-WERKE AG) <br> * Spalte 2, Zeile 16 - Zeile 26; Ansprüche 1-7; Abbildung 1 * <br> --- | 1-4 | RECHERCHIERTE SACHGEBIETE (Int.Cl.5) |
| A | EP-A-0 260 614 (SAKAI CHEM IND CO.) <br> * Ansprüche 1-23 * <br> --- | 1,5,6,10 | B01J <br> B01D |
| A | EP-A-0 470 334 (SIEMENS AG) <br> * das ganze Dokument * <br> ----- | 1,5-7,10 | |

Der vorliegende Recherchenbericht wurde für alle Patentansprüche erstellt

| Recherchenort | Abschlußdatum der Recherche | Prüfer |
|---|---|---|
| DEN HAAG | 19. Mai 1994 | Eijkenboom, A |